# EUROPÄISCHE PATENTSCHRIFT

(11) **EP 3 842 183 B1**
(45) Veröffentlichungstag und Bekanntmachung des Hinweises auf die Patenterteilung: **30.10.2024**
(21) Anmeldenummer: 19219337.3
(22) Anmeldetag: 23.12.2019
(51) Int. Cl.: B25B 5/12, B25B 5/16

(54) **KLEMMVORRICHTUNG**
CLAMPING DEVICE
DISPOSITIF DE SERRAGE

(43) Veröffentlichungstag der Anmeldung: 30.06.2021
(73) Patentinhaber: WISTRA GmbH Cargo Control, 23923 Selmsdorf (DE)
(72) Erfinder: Christian Birenheide,, 23919 Berkenthin (DE)
(74) Vertreter: Patentanwälte Hemmer Lindfeld Frese Partnerschaft mbB

(56) Entgegenhaltungen:
- EP-A2- 0 165 594
- WO-A2-2016/047943
- CN-U- 209 615 234
- DE-A1- 102016 015 047
- DE-A1- 2 051 119
- DE-U1- 20 012 731
- FR-A1- 3 047 681
- GB-A- 979 060
- US-A1- 2006 051 178
- US-A1- 2014 346 793
- US-B1- 6 186 715

## Beschreibung

Die Erfindung betrifft einen Zwischenwandverschluss zur Ladungssicherung sowie insbesondere eine Klemmvorrichtung für einen solchen Zwischenwandverschluss.

Zwischenwandverschlüsse, die auch unter dem Namen Klemmbrett bekannt sind, werden zur Ladungssicherung zwischen Bordwänden eingesetzt, beispielsweise von Kipperfahrzeugen, Pritschenfahrzeugen, Anhängern aber auch innerhalb von Laderäumen von Fahrzeugen, um die Ladung zu sichern.

Derartige Ladungssicherungsvorrichtungen sind auch unter dem Bezeichnungen Klemmbalken, Sperrbalken und Spannbrett bekannt und bestehen typischerweise aus einem langgestreckten, im Querschnitt rechteckigen Balken, an dessen Enden jeweils eine Klemmvorrichtung angebracht ist. Eine solche Klemmvorrichtung weist einen Träger auf, der am Ende des Balkens durch Quernieten befestigt ist und der sich in der Regel über einen Abschnitt an der Oberseite und der Stirnseite des Balkens sowie einen Teil der Seitenflächen erstreckt. An diesem Träger ist mittels einer Hebemechanik ein Klemmstück angebracht, welches durch einen um 90° abgebogenen Winkelhebel gebildet ist, dessen eine Seite parallel zur Oberseite des Trägers und dessen andere Seite mit Abstand zur Stirnseite des Balkens angeordnet ist. Der Abstand ist über eine Schraube einstellbar. Eine Klemmkraft zwischen Träger und Klemmstück wird mittels eines Handhebels der Hebelmechanik in Verbindung mit Federmitteln erzeugt, welche die Klemmkraft aufbringen.

Um den Zwischenwandverschluss ausreichend fest zischen zwei Bordwänden anzubringen, ist einerseits der Balken so weit zu telekopieren, dass seine Stirnseiten bzw. die in diesem Bereich angeordneten Trägerteile zur Anlage an den Innenseiten der Bordwände kommen. Dann ist der Abstand der Klemmstücke mittels Schrauben so einzustellen, dass in der geschlossenen Hebelstellung der Abstand deutlich kleiner als die Dicke der Bordwand ist, andererseits jedoch so groß, dass beim Schließen des Handhebels unter Eingliederung der Bordwand der maximale Federweg nicht erreicht wird, da sonst ein Schließen des Hebels nicht möglich ist. In der Praxis erfolgt daher häufig eine Einstellung derart, dass das Klemmstück bei geschlossenem Handhebel gerade die Bordwand berührt. Die bestimmungsgemäße Funktion kann der Zwischenwandverschluss nur dann übernehmen, wenn die Klemmvorrichtungen mit einer vorbestimmten definierten Federkraft gespannt werden, das heißt eine ausreichende Klemmkraft vorhanden ist.

Aus DE 200 12 731 U1 ist ein Zwischenwandverschluss mit den Merkmalen der Präambel von Anspruch 1 bekannt. Ein vergleichbarer Zwischenwandverschluss ist zudem aus der US 2006/0051178 A1 bekannt.

Vor diesem Hintergrund liegt der Erfindung die Aufgabe zugrunde, eine Klemmvorrichtung für einen Zwischenwandverschluss dahingehend zu verbessern, dass die Einhaltung der erforderlichen Klemmkraft verbessert wird.

Diese Aufgabe wird gemäß der Erfindung durch eine Klemmvorrichtung gemäß Anspruch 1 bzw. durch einen Zwischenwandverschluss gemäß Anspruch 13 mit endseitigen Klemmvorrichtungen gemäß der Erfindung erzielt. Vorteilhafte Ausgestaltungen der Erfindung sind in den Unteransprüchen, der nachfolgenden Beschreibung und den Zeichnungen angegeben.

Die erfindungsgemäße Klemmvorrichtung ist insbesondere zur Anwendung in Verbindung mit einem Zwischenwandverschluss zur Ladungssicherung vorgesehen, kann jedoch auch grundsätzlich an geeigneten anderen Bauteilen zur Ladungssicherung angebracht werden um diese am Fahrzeug oder am Fahrzeugaufbau zu befestigen bzw. zu sichern. Die Klemmvorrichtung weist einen Träger auf, welcher zur Befestigung an einem Ende eines solchen Ladungssicherungsbauteils, typischerweise also am Ende eines Ladungssicherungsbalkens, vorgesehen ist. Dieser Träger ist über eine Hebelmechanik mit einem Klemmstück verbunden, welches begrenzt beweglich am Träger angebracht ist und in einer geöffneten Stellung einen größeren Abstand zum Träger aufweisen als in einer geschlossenen Stellung. Um die Klemmkraft aufzubringen sind Federmittel vorgesehen, welche die Klemmkraft zwischen Träger und Klemmstück erzeugen. Gemäß der Erfindung ist eine Klemmkraftanzeige vorgesehen, durch welche der Anwender zumindest erkennen kann, ob die Klemmvorrichtung in Einbaulage, das heißt in geschlossener Stellung die bestimmungsgemäße, das heißt erforderliche Klemmkraft aufbringt oder nicht. Je nach Ausbildung der Klemmkraftanzeige kann darüber hinaus auch die konkret aufgebrachte Klemmkraft angezeigt werden.

Grundgedanke der erfindungsgemäßen Klemmvorrichtung ist es, durch eine Klemmkraftanzeige in möglichst einfacher und gut sichtbarer Funktion dem Anwender anzuzeigen, ob die Klemmvorrichtung in geschlossener Stellung eine ausreichende Klemmkraft aufbringt oder nicht, damit im letzteren Falle die erforderliche Nacheinstellung erfolgt. Damit soll sichergestellt werden, dass zum Beispiel ein Zwischenwandverschluss mit solchen Klemmvorrichtungen seiner bestimmungsgemäßen Funktion entsprechend angebracht wird, so dass der mit der erforderlichen Klemmkraft in den Fahrzeugaufbau oder Teile davon eingegliedert ist.

Vorteilhaft ist die erfindungsgemäße Klemmvorrichtung in Verbindung mit einem Zwischenwandverschluss eingesetzt, also an beiden Enden eines Ladungssicherungsbalkens angebracht. Gemäß der Erfindung kann die Klemmvorrichtung jedoch in Verbindung mit anderen Ladungssicherungsbauteilen Verwendung finden, an deren Ende oder Seite eine solche Klemmvorrichtung angebracht werden kann. Es versteht sich, dass der Träger gegebenenfalls an die anzubringende Vorrichtung anzupassen ist. Bei Zwischenwandverschlüssen ist dieser üblicherweise so ausgestaltet, dass er den Ladungssicherungsbalken über einen Endabschnitt an der Oberseite und der Stirnseite u-förmig übergreift, so dass er in einfacher Weise mittels Nieten, die durch fluchtende Ausnehmungen im Träger und Balken hindurchgeführt sind, fest und sicher verbunden werden kann.

Die Klemmkraftanzeige kann je nach Anforderung unterschiedlich ausgebildet sein. So ist es denkbar, im Bereich der für die Klemmung wirksamen Bauteile zwischen Träger und Klemmstück einen Kraftaufnehmer vorzusehen und die tatsächlich aufgebrachte Klemmkraft über eine elektronische Anzeige oder größenordnungsmäßig über eine Anzahl von Leuchtioden darzustellen. Auch ist es denkbar, die Anzeige akustisch auszubilden, so dass bei Erreichen der vorgeschriebenen Klemmkraft ein akustisches Signal abgegeben wird oder aber bei Nichterreichen ein Alarmsignal, wenn der Spannhebel im Schließstellung verbracht wird.

Da elektronische Einrichtungen der vorgenannten Art stets eine Energieversorgung benötigen und vergleichsweise empfindlich sind, ist gemäß einer vorteilhaften Weiterbildung der Erfindung die Klemmkraftanzeige vorteilhaft rein mechanisch aufgebaut. Ein solcher Aufbau kann kostengünstig realisiert werden, er ist robust und haltbar. Dabei wird es in einer Vielzahl von Anwendungsfällen nicht erforderlich sein, die Klemmkraft genau anzuzeigen, es wird vielmehr ausreichen anzugeben, ob eine erforderliche Klemmkraft erreicht ist oder nicht, was auch konstruktiv vergleichsweise einfach realisiert werden kann.

Vorteilhaft weist die Klemmvorrichtung gemäß der Erfindung eine Klemmkraftanzeige auf, welche mindestens eine Markierung hat, welche eine vorbestimmte Klemmkraft angibt. Eine solche Markierung kann beispielsweise eine Einprägung oder Kerbe sein, in einem bewegbaren Bauteil, mit einem Gegenstück in einem nicht bewegbaren Bauteil. Dabei ist zur Klemmkraftanzeige der Federweg der Federmittel darzustellen oder zu symbolisieren. Als Federmittel wird vorteilhaft eine Schraubenfeder verwendet, deren Federweg in einfacher Weise darstellbar, das heißt anzeigbar ist.

Die erfindungsgemäße Klemmvorrichtung ist grundsätzlich nicht an den bekannten Aufbau gebunden, bei welchem das Klemmstück über eine Hebelmechanik begrenzt beweglich am Träger gelagert ist und mittels eines Handhebels von einer offenen in eine geschlossene Stellung überführt wird, in welcher die Federkraft zur Erzeugung der Klemmkraft genutzt wird. Grundsätzlich kann das Klemmstück auch linear am Träger mit einer entsprechenden Mechanik geführt sein. Die erfindungsgemäße Klemmkraftanzeige kann jedoch vorteilhaft in Klemmvorrichtungen integriert werden, wie sie bereits zum Stand der Technik zählen. Dabei weist der Träger einen im Wesentlichen in Klemmrichtung verlaufenden Abschnitt auf, an dem ein Handhebel angelenkt ist. Dieser Handhebel weist im Bereich zwischen seiner trägerseitigen Anlenkstelle und dem Handgriff eine Führung für einen Zwischenhebel auf, der mit einem Ende am Klemmstück angelenkt ist und der innerhalb der Führung in Richtung seiner Längsachse bewegbar ist. Diese Führung ist schwenkbeweglich im Handhebel zwischen Handgriff und Anlenkstelle gelagert. Die Federmittel sind dort in Form einer Schraubenfeder gebildet, welche an der Führung einerseits und an einer am freien Ende des Zwischenhebels, welches mit einem Gewinde versehen ist, an einer dort aufgeschraubten Mutter andererseits anliegt. Über diese Mutter ist der Abstand der Klemmteile zueinander, also der Abstand zwischen Träger und Klemmstück einstellbar.

Da zur Ermittlung der Klemmkraft ausschließlich der Federweg der Feder zu ermitteln ist, kann eine Klemmkraftanzeige in diesem Bereich einfach realisiert werden, beispielsweise durch eine Markierung am Zwischenhebel. Vorteilhaft ist am Hebel oder an der Führung eine Gegenmarkierung und am Ende der Feder oder einer zwischen Hebel und Feder angeordneten Hülse eine außenseitige Skala vorgesehen. Grundsätzlich können in diesem Bereich vorteilhaft eine oder mehrere Markierungen und Gegenmarkierungen vorgesehen sein, um die Klemmkraftanzeige zu realisieren.

Statt einer Gegenmarkierung kann vorteilhaft auch eine Ausnehmung vorgesehen sein, welche den Blick auf die Markierung freigibt. Die Markierung kann gegebenenfalls auch an der Feder selbst vorgesehen sein, die Gegenmarkierung vorteilhaft am Handhebel oder der darin schwenkbar angeordneten Führung. Durch die Anbringung mehrerer Markierungen an der Feder oder am Zwischenhebel oder durch entsprechende Gegenmarkierungen am Hebel bzw. der Führung, kann auch bei Verwendung dieser mechanischen Anzeige die Federkraft größenordnungsmäßig angezeigt werden, wenn dies gewünscht ist.

Für den Einsatz in Verbindung mit einem Zwischenwandverschluss wird es hingegen vorteilhaft sein, die Klemmkraft nicht größenmäßig darzustellen, sondern eine Markierung vorzusehen, welche sichtbar wird, wenn eine ausreichende Klemmkraft gebildet ist. Vorteilhaft oder alternativ kann eine Markierung vorgesehen sein, welche eine nicht ausreichende Klemmkraft anzeigt. Konstruktiv besonders einfach und zugleich praktisch in der Anwendung ist eine Ausgestaltung, bei welcher im Hebel oder in der Führung eine Ausnehmung vorgesehen ist, welche einen Abschnitt des Zwischenhebels sichtbar macht, wobei vorteilhaft zwischen Mutter und Schraubenfeder ein Markierungsring angeordnet ist, der so angeordnet ist, dass dieser nur dann in dem Bereich der Ausnehmung gelangt und somit durch diese sichtbar ist, wenn die erforderliche Spannkraft erreicht ist. Gemäß einer Weiterbildung der Erfindung sind zwei oder mehr optisch unterschiedliche Markierungsringe vorgesehen, so dass durch die Sichtöffnung die Klemmkraft in Stufen anzeigbar ist.

Gemäß einer vorteilhaften Weiterbildung der Erfindung sind zwei Markierungsringe, nämlich ein roter und ein grüner Markierungsring vorgesehen, die hintereinander zwischen dem Ende der Schraubenfeder und der Mutter derart angeordnet sind, dass bei nicht ausreichender Spannkraft ein Abschnitt des Außenumfangs des roten Markierungsrings in der Sichtöffnung sichtbar ist und erst bei Erreichen der erforderlichen Klemmkraft ein Abschnitt des grünen Markierungsrings in dem Sichtfenster erkennbar ist. Der Anwender kann somit durch einen Blick auf das von außen deutlich erkennbare Sichtfenster sofort feststellen, ob die erforderliche Klemmkraft erreicht ist oder nicht und gegebenenfalls den Hebel wieder in die geöffnete Stellung bringen, um die Mutter weiter auf den Zwischenhebel aufzuschrauben und damit den Abstand zwischen Klemmstück und Träger zu verringern.

Gemäß einer vorteilhaften Weiterbildung der Erfindung weisen die Federmittel nicht nur die Schraubendruckfeder zur Erzeugung der Klemmkraft, sondern eine weitere Schraubendruckfeder zur Erzeugung einer Rückstellkraft auf, welche zwischen der Führung und einem Absatz des Zwischenhebels angeordnet ist und dafür sorgt, dass beim Öffnen des Handhebels das Klemmstück vom Träger wegbewegt wird. Diese zweite Schraubenfeder ist kleiner dimensioniert als die die klemmkraftaufbringende und erzeugt lediglich die Rückstellkraft, welche erforderlich ist, um das Klemmstück in Bezug auf den Träger zu verschieben.

Die Erfindung ist nachfolgend anhand eines in der Zeichnung dargestellten Ausführungsbeispiels näher erläutert. Es zeigen:
- Fig. 1: in stark vereinfachter schematischer Darstellung eine geschlossene Klemmvorrichtung am Ende eines Ladungssicherungsbalkens als Teil eines Zwischenwandverschlusses,
- Fig. 2: die Bauteile gemäß Fig. 1 in Explosionsdarstellung,
- Fig. 3: die Klemmvorrichtung gemäß Fig. 1 in geöffneter Stellung mit eingegliedertem Klemmbalken,
- Fig. 4: eine teilweise im Schnitt dargestellte Seitenansicht der Anordnung gemäß Fig. 3, und
- Fig. 5: in vergrößerter Darstellung die Einzelheit V in Fig. 4.

In den Figuren ist das eine Ende eines Zwischenwandverschlusses 1 dargestellt, dessen anderes Ende in gleicher Weise ausgebildet und deshalb nicht im Einzelnen dargestellt und beschrieben ist. Der Zwischenwandverschluss 1 weist einen Ladungssicherungsbalken 2 auf, der zur Anpassung an die lichte Weite der Bordwände teleskopierbar ist. An jedem Ende des Ladungssicherungsbalkens 2 ist eine Klemmvorrichtung 3 angeordnet, welche einen in Seitenansicht rechtwinklig abgebogenen Träger 4 aufweist, der den oberen Endabschnitt und die Stirnseite des Ladungssicherungsbalkens 2 umgreift. Der Träger 4 weist ein u-förmiges Profil auf, so dass er das Ende des Ladungssicherungsbalkens 2 nicht nur an der Oberseite und der Stirnseite, sondern auch in Abschnitten seiner Flachseiten 5 überragt bzw. umfasst. Der Träger 4 ist in fluchtenden, den Ladungssicherungsbalken 2 ebenfalls durchsetzenden Bohrungen mittels Nieten 6 fest mit dem Ladungssicherungsbalken 2 verbunden. An dem Träger 4 ist über eine Hebelanordnung 7 ein Klemmstück 8 begrenzt beweglich angelenkt. Das Klemmstück 8 ist, wie der Träger 4, um 90° abgebogen, derart, dass es einen Klemmteil 9 aufweist, der parallel zur Stirnseite des Ladungssicherungsbalkens 2 angeordnet ist sowie einen parallel zur Oberseite des Trägers 4 angeordneten Teil 10, der über eine endseitig offene Längsausnehmung 11 an einem an der Oberseite des Trägers 4 angeordneten und im Querschnitt T-förmigen Führungsteil 12 formschlüssig derart geführt ist, dass das Klemmstück 8 im Wesentlichen nur in Längsrichtung des Ladungssicherungsbalkens 2 bewegbar ist, um so die lichte Weite zwischen der stirnseitigen Fläche des Trägers 4 und dem Klemmteil 9 verändern zu können.

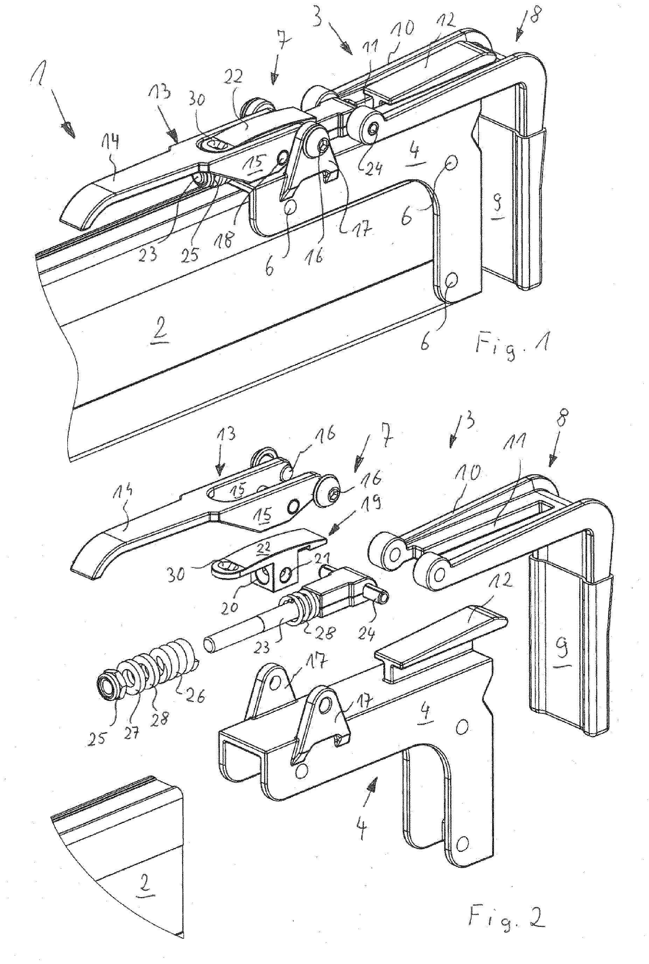

Der Träger 4 ist mit dem Klemmstück 8 über eine Hebelanordnung 7 verbunden, welche einen Handhebel 13 aufweist, der an der Oberseite des Trägers 4 mit Abstand dazu schwenkbar angelenkt ist. Der Handhebel 13 ist an seinem freien Ende als Handgriff 14 ausgebildet und geht in Richtung zu seiner Anlenkstelle in zwei seitliche Schenkel 15 über, nahe deren Enden eine diese jeweils durchsetzende Achse 16 angeordnet ist, die in seitlich am Träger 4 angebrachten und diesen nach oben überragenden Lagerplatten 17 festgelegt sind. Der Handhebel 13 ist somit um die Achse 16 schwenkbar am Träger 4 befestigt. Im Bereich der seitlichen Schenkel 15 sind mit geringem Abstand zur Achse 16 und größeren Abstand zum Handgriff 14 Ausnehmungen für eine Achse 18 vorgesehen, die für eine Führung 19 ist, welche um die Achse 18 schwenkbar innerhalb des Handhebels 13 zwischen den seitlichen Schenkeln 15 gelagert ist. Diese Führung 19 ist in Figur 2 gut sichtbar. Sie besteht aus dem eigentlichen Führungsteil mit einer Führungsbohrung 20 und seitlichen Bohrungen 21 zur Aufnahme der Achse 18, die wie die Achse 16 durch zwei Achsstummel gebildet ist, an jeder Seite der Schenkel 15. Darüber hinaus weist die Führung 19 an der Oberseite eine Abdeckung 22 auf, welche den durch die Schenkel 15 gebildeten Freiraum innerhalb des Handhebels 13 nach oben hin weitgehend abschließt.

In der Bohrung 20 der Führung 19 ist ein Zwischenhebel 23 in Richtung seiner Längsachse beweglich geführt, dessen eines Ende über eine Achse 24 mit dem freien Ende des Teils 10 des Klemmstücks 8 verbunden ist. Die Achsen 16 und 18 sind als Achsstummel ausgebildet, während die Achse 24 durchgehend ausgebildet ist, sie sind sämtlichst parallel zueinander angeordnet.

Der Zwischenhebel 23, der im Bereich der Achse 24 in Draufsicht T-förmig ausgebildet ist, weist von der Achse 24 wegweisend ein rechteckiges Querschnittsprofil auf, ist im Bereich vor der Führung 19 abgesetzt und im Querschnitt rund ausgebildet. Das freie Ende des Zwischenhebels 23 ist mit einem Gewinde versehen, an dessen Ende eine Mutter 25 aufgeschraubt ist. Der im Querschnitt runde Teil des Zwischenhebels 23 ist innerhalb der Bohrung 20 längsverschiebbar geführt, zwischen Mutter 25 und Führung 19 ist eine Schraubendruckfeder 26 angeordnet, über welche die Klemmkraft erzeugt wird. Zwischen der Mutter 25 und dem Ende der Schraubenfeder 26 sind zwei Markierungsringe 27 und 28 angeordnet, von denen der der Mutter 25 benachbarte Markierungsring 27 grün und der am Ende der Feder 26 anliegende Markierungsring 28 rot ist.

Zur anderen Seite der Führung 19 ist eine weitere Schraubendruckfeder 29 vorgesehen, die sich mit einem Ende an der Führung 19 und mit dem anderen Ende an einem Absatz auf dem Zwischenhebel 23 abstützt, dort wo der rechteckige Querschnitt in den runden Querschnitt übergeht. Diese Schraubenfeder 29 dient zum Rückstellen des Klemmstücks 8, bewegt dieses also vom Balken 2 weg.

Die Abdeckung 22 weist im Bereich der Markierungsringe 27, 28 eine Ausnehmung 30 auf, welche eine Sichtöffnung bildet, die je nach Spannung der Feder 26 somit entweder von außen gesehen grün oder rot in Erscheinung tritt. So lange durch dieses Sichtfenster der rote Markierungsring 28 und damit die Farbe rot im Sichtfenster erkennbar ist, ist die Spannkraft der Feder 26 nicht ausreichend, um die erforderliche Klemmkraft zwischen dem Klemmteil 9 und der Stirnseite des Trägers 4 aufzubringen. Erst wenn die Feder 26 so weit gespannt ist, dass der grüne Markierungsring 27 durch die Ausnehmung 30 sichtbar wird, ist die notwendige Klemmkraft durch entsprechende Federvorspannung erreicht. Dann ist das Sichtfenster 30 grün.

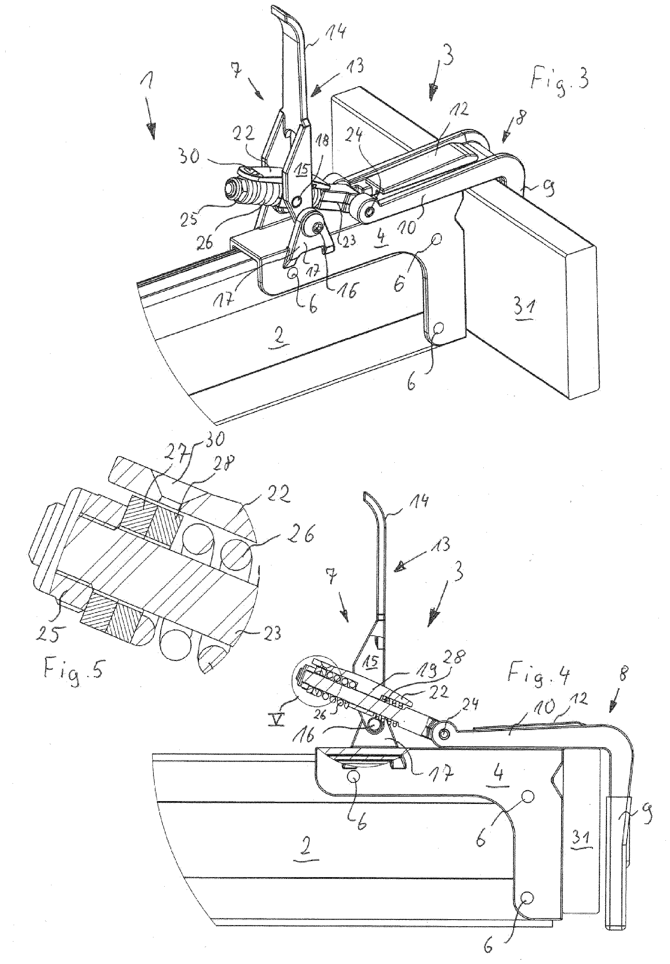

Zum Anbringen der Klemmvorrichtung 3 an einer Wand 31 eines Fahrzeugs wird der Handhebel 13 am Handgriff 14 gepackt und in die in Figur 3 und 4 dargestellte senkrechte Position gebracht, in welcher über den Zwischenhebel 23 das Klemmstück 8 mit dem Klemmteil 9 so weit zum Träger 4 beabstandet ist, dass es die Wand 31 übergreifen kann. So dann wird der Handhebel 13 von Hand in die in Figur 1 dargestellte um 90° geschwenkte Stellung verbracht, in welcher der Hebel im Wesentlichen an der Oberseite des Ladungssicherungsbalkens 2 parallel zu diesem angeordnet ist. In dieser Stellung ist die Feder 26 gespannt. Ob die bestimmungsgemäße Klemmkraft erreicht wird oder nicht, kann anhand des Federweges bestimmt werden. Ist in dem Sichtfenster 30 die Farbe rot, also der darunter liegende rote Markierungsring 28 zu erkennen, dann reicht die Federspannung nicht aus, der Handhebel 13 muss nochmals geöffnet werden und durch Anziehen der Mutter 25 das Klemmstück 8 weiter zum Träger 4 bewegt werden. Reicht der Federweg aus, ist also die Vorspannung der Feder so groß, dass eine ausreichende Klemmkraft zwischen Träger 4 und Klemmteil 9 gebildet ist, dann ist in der Sichtöffnung 30 grün zu sehen, das heißt der grüne Markierungsring 27 ist sichtbar. Auf diese Weise kann der Benutzer des Zwischenwandverschlusses durch einfache Sichtkontrolle nach dem Schließen des Handhebels feststellen, ob die Klemmkraft der Klemmvorrichtung 3 ausreicht oder ob die Klemmvorrichtung hinsichtlich der lichten Weite der Klemmteile zueinander enger einzustellen ist.

### Bezugszeichenliste

- 1: Zwischenwandverschluss
- 2: Ladungssicherungsbalken
- 3: Klemmvorrichtung
- 4: Träger
- 5: Flachseiten von 2
- 6: Nieten
- 7: Hebelanordnung
- 8: Klemmstück
- 9: Klemmteil
- 10: Teil parallel zum Balken 2
- 11: Längsausnehmung in 10
- 12: Führungsteil
- 13: Handhebel
- 14: Handgriff
- 15: seitliche Schenkel
- 16: Achse
- 17: Lagerplatten
- 18: Achse
- 19: Führung
- 20: Bohrung
- 21: Bohrung
- 22: Abdeckung
- 23: Zwischenhebel
- 24: Achse
- 25: Mutter
- 26: Schraubendruckfeder
- 27: grüner Markierungsring
- 28: roter Markierungsring
- 29: Schraubendruckfeder
- 30: Ausnehmung, Sichtfenster
- 31: Fahrzeugwand

## Patentansprüche

1. Zwischenwandverschluss (1) zur Ladungssicherung, mit einem teleskopierbaren Ladungssicherungsbalken (2) der an seinen Enden mit Klemmvorrichtungen (3) versehen ist, die jeweils einen Träger (4) aufweisen, welcher an einem Ende des Ladungssicherungsbalkens (2) befestigt ist, mit einem Klemmstück (8), welches mittels einer Hebelmechanik (7) begrenzt beweglich am Träger (4) angebracht ist und mit Federmitteln (26), welche zur Erzeugung einer Klemmkraft zwischen Träger (4) und Klemmstück (8) wirksam sind, **dadurch gekennzeichnet, dass** an den Klemmvorrichtungen (3) jeweils eine Klemmkraftanzeige (27, 28, 30) vorgesehen ist, wobei ein Anwender durch die Klemmkraftanzeige (27, 28, 30) zumindest erkennen kann, ob die Klemmvorrichtung (3) in geschlossener Stellung die erforderliche Klemmkraft zwischen Träger (4) und Klemmstück (8) aufbringt.

2. Zwischenwandverschluss nach Anspruch 1, **dadurch gekennzeichnet, dass** die Klemmkraftanzeige (27, 28, 30) mechanisch ausgebildet ist

3. Zwischenwandverschluss nach Anspruch 1 oder 2, **dadurch gekennzeichnet, dass** die Klemmkraftanzeige mindestens eine Markierung (27, 28) aufweist, welche eine vorbestimmte Klemmkraft angibt.

4. Zwischenwandverschluss nach einem der vorhergehenden Ansprüche, **dadurch gekennzeichnet, dass** der Träger (4) einen im Wesentlichen in Klemmrichtung verlaufenden Abschnitt aufweist, an dem ein Handhebel (13) angelenkt ist, der im Bereich zwischen seiner trägerseitigen Anlenkstelle und dem Handgriff (14) einen Zwischenhebel (23) schwenkbar aufnimmt, wobei ein Ende des Zwischenhebels (23) am Klemmstück (8) angelenkt ist und der Zwischenhebel (23) unter Zwischenschaltung der Federmittel (26) schwenkbeweglich mit dem Handhebel (13) verbunden ist.

5. Zwischenwandverschluss nach einem der vorhergehenden Ansprüche, **dadurch gekennzeichnet, dass** die Federmittel (26) eine das freie Ende des Zwischenhebels (23) umgebende Schraubenfeder (26) aufweisen, deren eines Ende an einer Im Handhebel (13) schwenkbeweglich aufgenommenen Führung (19) anliegt und dessen anderes Ende an einer den Federweg begrenzenden Mutter (25) am Ende des Zwischenhebels (13) anliegt, wobei die Markierung am Zwischenhebel (23) vorgesehen ist.

6. Zwischenwandverschluss nach einem der vorhergehenden Ansprüche, **dadurch gekennzeichnet, dass** eine Anzeige (30) im Handhebel (13) oder in der Führung (19) vorgesehen ist, derart, dass bei einer definierten Spannkraft der Schraubenfeder (26) die Markierung (27) am Zwischenhebel (23) in der Anzeige (30) sichtbar ist.

7. Zwischenwandverschluss nach einem der vorhergehenden Ansprüche, **dadurch gekennzeichnet, dass** mehrere Markierungen (27, 28) vorgesehen sind, anhand deren Sichtbarkeit in der Anzeige (30) die Spannkraft ermittelbar ist.

8. Zwischenwandverschluss nach einem der vorhergehenden Ansprüche, **dadurch gekennzeichnet, dass** der Handhebel (13) den Zwischenhebel (23) im Bereich der Schraubenfeder (26) an mindestens zwei Seiten umgibt und dass die Anzeige durch eine Sichtöffnung (30) in einer Seite gebildet ist.

9. Zwischenwandverschluss nach einem der vorhergehenden Ansprüche, **dadurch gekennzeichnet, dass** eine Markierung durch einen vorzugsweise zwischen Schraubenfeder (26) und Mutter (25) angeordneten Markierungsring (27, 28) gebildet ist.

10. Zwischenwandverschluss nach einem der vorhergehenden Ansprüche, **dadurch gekennzeichnet, dass** zwei oder mehr optisch unterschiedliche Markierungsringe (27, 28) vorgesehen sind, die in Abhängigkeit der Federspannkraft in der Anzeige (30) sichtbar sind.

11. Zwischenwandverschluss nach einem der vorhergehenden Ansprüche, **dadurch gekennzeichnet, dass** ein roter und ein grüner Markierungsring (28, 27) vorgesehen sind, derart, dass bei Erreichen einer vorbestimmten Federspannkraft der grüne und sonst der rote Markierungsring in der Anzeige (30) sichtbar sind.

12. Zwischenwandverschluss nach einem der vorhergehenden Ansprüche, **dadurch gekennzeichnet, dass** eine zweite Schraubenfeder (29) am Zwischenhebel (23) vorgesehen ist, die an der anderen Seite der Führung (19) anliegt und einem Absatz des Zwischenhebels (23) anliegt und deren Federkraft entgegen der Klemmrichtung wirkt.

## Claims

1. A parting wall lock (1) for cargo securing, with a telescopic cargo securing beam (2) which is provided at its ends with clamping devices (3) which each have a carrier (4) which is fastened to one end of the cargo securing beam (2), with a clamping piece (8) which is attached to the carrier (4) so as to be movable to a limited extent by means of a lever mechanism (7), and with spring means (26) which are effective for generating a clamping force between the carrier (4) and the clamping piece (8), **characterized in that** a clamping force indicator (27, 28, 30) is provided on each of the clamping devices (3), wherein a user can at least recognize by means of the clamping force indicator (27, 28, 30) whether the clamping device (3) applies the required clamping force between the carrier (4) and the clamping piece (8) in the closed position.

2. The parting wall lock according to claim 1, **characterized in that** the clamping force indicator (27, 28, 30) is of mechanical design.

3. The parting wall lock according to claim 1 or 2, **characterized in that** the clamping force indicator has at least one marking (27, 28) which indicates a predetermined clamping force.

4. The parting wall lock according to any one of the preceding claims, **characterized in that** the carrier (4) has a portion running substantially in the clamping direction, to which a hand lever (13) is articulated, which pivotably accommodates an intermediate lever (23) in the region between its articulation point on the carrier side and the handle (14), wherein one end of the intermediate lever (23) is articulated to the clamping piece (8) and the intermediate lever (23) is pivotably connected to the hand lever (13) with the interposition of the spring means (26).

5. The parting wall lock according to any one of the preceding claims, **characterized in that** the spring means (26) have a helical spring (26) surrounding the free end of the intermediate lever (23), one end of which helical spring rests against a guide (19) pivotably accommodated in the hand lever (13) and the other end of which helical spring rests against a nut (25) limiting the spring travel at the end of the intermediate lever (13), wherein the marking is provided on the intermediate lever (23).

6. The parting wall lock according to any one of the preceding claims, **characterized in that** an indicator (30) is provided in the hand lever (13) or in the guide (19) in such a manner that the marking (27) on the intermediate lever (23) is visible in the indicator (30) at a defined tension force of the coil spring (26).

7. The parting wall lock according to any one of the preceding claims, **characterized in that** a plurality of markings (27, 28) is provided, based on the visibility of which in the indicator (30) the tension force can be determined.

8. The parting wall lock according to any one of the preceding claims, **characterized in that** the hand lever (13) surrounds the intermediate lever (23) in the region of the coil spring (26) on at least two sides, and **in that** the indicator is formed by a viewing opening (30) in one side.

9. The parting wall lock according to any one of the preceding claims, **characterized in that** a marking is formed by a marking ring (27, 28) preferably arranged between the coil spring (26) and the nut (25).

10. The parting wall lock according to any one of the preceding claims, **characterized in that** two or more visually different marking rings (27, 28) are provided, which are visible in the indicator (30) depending on the spring tension force.

11. The parting wall lock according to any one of the preceding claims, **characterized in that** a red and a green marking ring (28, 27) are provided in such a manner that when a predetermined spring tension force is reached, the green marking ring and otherwise the red marking ring are visible in the indicator (30).

12. The parting wall lock according to any one of the preceding claims, **characterized in that** a second helical spring (29) is provided on the intermediate lever (23), which helical spring rests against the other side of the guide (19) and rests against a shoulder of the intermediate lever (23) and the spring force of which acts counter to the clamping direction.

## Revendications

1. Fermeture de cloison (1) pour la sécurisation de charge avec une barre de sécurisation de charge télescopique (2), qui est dotée à ses extrémités de dispositifs de serrage (3), qui comportent respectivement un support (4), lequel est fixé à une extrémité de la barre de sécurisation de charge (2) avec un élément de serrage (8), lequel est monté de façon mobile limitée sur le support (4) au moyen d'un mécanisme à levier (7) et avec des moyens faisant ressort (26), lesquels sont actifs pour produire une force de serrage entre le support (4) et l'élément de serrage (8), **caractérisée en ce qu'**un affichage de force de serrage (27, 28, 30) est respectivement prévu sur les dispositifs de serrage (3), sachant qu'un utilisateur peut au moins identifier par l'affichage de force de serrage (27, 28, 30), si le dispositif de serrage (3) dans la position fermée applique la force de serrage nécessaire entre le support (4) et l'élément de serrage (8).

2. Fermeture de cloison selon la revendication 1, **caractérisée en ce que** l'affichage de force de serrage (27, 28, 30) est constitué de façon mécanique.

3. Fermeture de cloison selon la revendication 1 ou 2, **caractérisée en ce que** l'affichage de force de serrage comporte au moins un repère (27, 28), lequel indique une force de serrage prédéterminée.

4. Fermeture de cloison selon l'une quelconque des revendications précédentes, **caractérisée en ce que** le support (4) comporte une section passant pour l'essentiel en direction de serrage, sur laquelle est articulé un levier manuel (13), qui loge de façon pivotable un levier intermédiaire (23) dans la zone entre sa position d'articulation côté support et la poignée (14), sachant qu'une extrémité du levier intermédiaire (23) est articulée sur l'élément de serrage (8) et le levier intermédiaire (23) est relié de façon mobile en pivotement au levier manuel (13) par l'intermédiaire des moyens faisant ressort (26).

5. Fermeture de cloison selon l'une quelconque des revendications précédentes, **caractérisée en ce que** les moyens faisant ressort (26) comportent un ressort hélicoïdal entourant l'extrémité libre du levier intermédiaire (23), dont une extrémité s'applique à un guidage (19) logé de façon mobile en pivotement dans le levier manuel (13) et dont l'autre extrémité s'applique à un écrou (25) limitant le débattement de ressort à l'extrémité du levier intermédiaire (13), sachant que le repère est prévu sur le levier intermédiaire (23).

6. Fermeture de cloison selon l'une quelconque des revendications précédentes, **caractérisée en ce qu'**un affichage (30) est prévu dans le levier manuel (13) ou dans le guidage (19) de telle manière qu'à une force de serrage définie du ressort hélicoïdal (26), le repère (27) est visible sur le levier intermédiaire (23) à dans l'affichage (30).

7. Fermeture de cloison selon l'une quelconque des revendications précédentes, **caractérisée en ce que** plusieurs repères (27, 28) sont prévus à l'aide de la visibilité desquels la force de serrage peut être déterminée dans l'affichage (30).

8. Fermeture de cloison selon l'une quelconque des revendications précédentes, **caractérisée en ce que** le levier manuel (13) entoure le levier intermédiaire (23) dans la zone du ressort hélicoïdal (26) sur au moins deux côtés et **en ce que** l'affichage est formé d'un côté par une ouverture de vision (30).

9. Fermeture de cloison selon l'une quelconque des revendications précédentes, **caractérisée en ce qu'**un repère est formé par une bague repère (27, 28) disposée de préférence entre le ressort hélicoïdal (26) et l'écrou (25).

10. Fermeture de cloison selon l'une quelconque des revendications précédentes, **caractérisée en ce que** deux bagues repères (27, 28) ou plus différentes du point de vue optique sont prévues qui sont visibles dans l'affichage (30) en fonction de la force de serrage de ressort.

11. Fermeture de cloison selon l'une quelconque des revendications précédentes, **caractérisée en ce qu'**une bague repère rouge et une verte (28, 27) sont prévues de telle manière qu'en atteignant une force de serrage de ressort prédéterminée la bague repère verte et sinon la rouge sont visibles dans l'affichage (30).

12. Fermeture de cloison selon l'une quelconque des revendications précédentes, **caractérisée en ce qu'**un deuxième ressort hélicoïdal (29) est prévu sur le levier intermédiaire (23), qui s'applique à l'autre côté du guidage (19) et s'applique à un gradin du levier intermédiaire (23) et dont la force agit contrairement à la direction de serrage.
